# EUROPÄISCHE PATENTSCHRIFT

(11) **EP 4 278 397 B1**
(45) Veröffentlichungstag und Bekanntmachung des Hinweises auf die Patenterteilung: **01.01.2025**
(21) Anmeldenummer: 22701345.5
(22) Anmeldetag: 14.01.2022
(51) Int. Cl.: C23C 18/12, C25B 1/46, C25B 9/23, C25B 11/052, C25B 11/032, C25B 11/056, C25B 11/081, H01M 4/86, H01M 4/88, H01M 8/10, C25B 11/063, C25B 1/04

(54) **HERSTELLUNGSMETHODE EINER KATALYSATORBESCHICHTETEN DREIDI-MENSIONAL STRUKTURIERTEN ELEKTRODE**
METHOD OF MANUFACTURING A CATALYST-COATED THREE-DIMENSIONALLY STRUCTURED ELECTRODE
PROCÉDÉ DE FABRICATION D'UNE ÉLECTRODE STRUCTURÉE À TROIS DIMENSIONS REVÊTUE DE CATALYSEUR

(30) Priorität: 15.01.2021 EP 21151795
(43) Veröffentlichungstag der Anmeldung: 22.11.2023
(73) Patentinhaber: Nano Cats GmbH, 10623 Berlin (DE)
(72) Erfinder: BERNSMEIER, Denis, 10709 Berlin (DE); KRÄHNERT, Ralph, 13469 Berlin (DE); BERNICKE, Michael, 10245 Berlin (DE)
(74) Vertreter: Hertin und Partner Rechts- und Patentanwälte PartG mbB
(86) Internationale Anmeldenummer: PCT/EP2022/050728
(87) Internationale Veröffentlichungsnummer: WO 2022/152836

(56) Entgegenhaltungen:
- EP-A1- 3 617 348
- WO-A1-2020/009475
- CN-A- 110 783 574
- US-A1- 2019 211 464

## Beschreibung

Die Erfindung betrifft ein Verfahren zur Herstellung einer katalysatorbeschichteten dreidimensional strukturierten Elektrode. In einem ersten Verfahrensschritt wird ein dreidimensional strukturiertes Metallsubstrat bereitgestellt. Anschließend wird eine mesoporöse Katalysatorschicht auf das dreidimensional strukturierte Metallsubstrat synthetisiert. Die Synthese erfolgt bevorzugt indem zunächst eine Lösung oder Suspension aus einem Templat, einem Metall-Präkursor und einem Lösungsmittel generiert wird. Anschließend wird die Lösung oder Suspension auf das dreidimensional strukturierte Metallsubstrat aufgetragen, sodass sich ein Film auf dem dreidimensional strukturierte Metallsubstrat bildet. Danach wird das dreidimensional strukturierte Metallsubstrat bei einer Temperatur T₁ getrocknet, sodass das Lösungsmittel innerhalb des Films verdampft und eine Schicht einer Katalysatorvorstufe mit integrierten Templatstrukturen erhalten wird. Abschließend wird das Katalysatorvorstufen umfassende dreidimensional strukturierte Metallsubstrat einer thermischen Behandlung unterzogen, sodass eine mesoporöse Katalysatorschicht entsteht.

Darüber hinaus betrifft die Erfindung eine Elektrode, welche durch das Verfahren eingangs genannter Art hergestellt wurde, sowie eine elektrochemische Zelle mit einer solchen Elektrode.

### Hintergrund und Stand der Technik

In Elektrolysezellen für die Wasserspaltung sowie Brennstoffzellen zur Rückverstromung gasförmigen Wasserstoffs, werden üblicherweise mit einem Binder dispergierte Katalysatorpulver auf eine Membran mittels Sprüh-, Siebdruck-, oder Rakelverfahren aufgetragen. Derartige Verfahren sind bspw. aus den Druckschriften DE19544323A1 und US20120094210A1 bekannt.

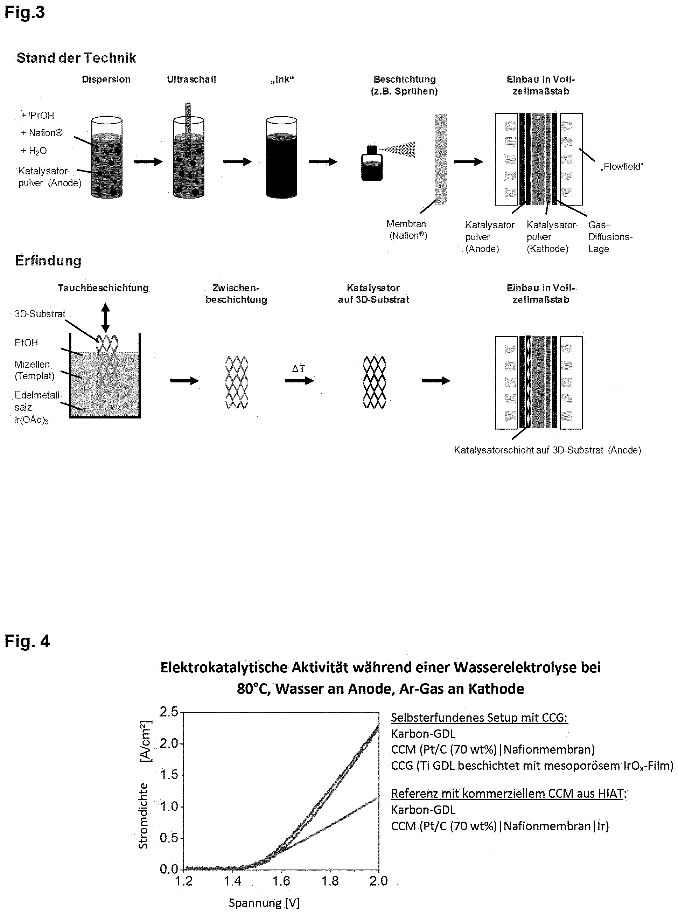

Bei der Herstellung einer Katalysatorschicht mit den oben genannten Techniken gelingt es nicht, eine gleichmäßige Beschichtung mit einstellbarer Porosität und ohne den Einsatz eines Binders zu realisieren. Dabei zeigen im Halbzellmaßstab insbesondere binderfreie und mesoporös templatierte Anodenmaterialien verbesserte Aktivitäten in der Sauerstoffevolution (OER). Es hat sich gezeigt, dass Iridiumhaltige mesoporöse Schichten eine deutlich höhere Ir-Massenaktivität als vergleichbare binderbasierte und über Ink-Methoden hergestellte Katalysatorschichten erreichen (vgl. auch Fig. 4).

Eine direkte Beschichtung der Membran mit einem binderfreien mesoporös templatierten Katalysator ist nicht möglich, da die Synthese eines solchen Katalysators (ohne Binder) eine thermische Behandlung erfordert. Die thermische Behandlung führt zur Zerstörung der Membran.

Um dennoch die hochaktiven Katalysatorschichten in einen Elektrolyseur oder einer Brennstoffzelle einzusetzen, musste daher eine alternative Methode gefunden werden, die eine Überführung der mesoporösen Schicht aus dem Halb- in den Vollzellmaßstab ermöglicht.

In der US 2019/0211464 A1 wird ein Verfahren zur Herstellung einer Elektrode für die Elektrolyse offenbart. Hierzu wird zunächst eine Beschichtungslösung umfassend einen Platingruppenmetall-Präkusor, ein Seltenerdmetal-Präkursor, ein organisches Lösungsmittel und ein Lösungsmittel auf Aminbasis hergestellt. Die Beschichtungslösung wird auf ein Metallsubstrat aufgetragen, um eine Katalysatorschicht zu bilden. Anschließend wird die Katalysatorschicht getrocknet und einer Wärmebehandlung unterzogen. Die Auswahl des Metallsubstrats ist nicht beschränkt und kann porös sein, beispielsweise ein Gitter, ein Metallschaum oder ein Streckmetall. Die Katalysatorschicht als solche wird nicht als porös dargelegt. Hierdurch weist die Katalysatorschicht keine geeignete spezifische Oberfläche und ist nachteilig hinsichtlich ihrer Masse ausgebildet.

EP 3617348 A1 offenbart einen Oxid-dispergierten porösen Metallkörper. Dieser kann durch einen metallischen porösen Körper bereitgestellt werden, der einem Beschichtungsbad mit Nickelsulfamat zugeführt wird. Die Beschichtung wird für die Herstellung einer Elektrode eingesetzt. Die Beschichtung selbst beinhaltet keine Poren.

In der CN 110783574 A wird ein Verfahren zur Herstellung einer Brennstoffzellen-Elektrode offenbart. Das Herstellungsverfahren setzt hierzu ein Schaummetall ein, welches in eine organische Lösung gelegt und wieder herausgenommen wird. Weitere Verfahrensschritte wie das Waschen mit deionisiertem Wasser können ebenfalls erfolgen. Weiterhin wird ein Katalysatorpulver, ein Polymerbindemittel und ein organisches Lösungsmittel gleichmäßig miteinander vermischt, um eine Katalysatoraufschlämmung zu erhalten. Die Katalysatoraufschlämmung wird auf den Metallschaum aufgetragen. Eine Makroporosität wird durch die Struktur des Schaummetalls erzielt. Hierdurch ist jedoch die Verteilung, Größe und Ausgestaltung der Poren auf die des Metallschaums beschränkt, insbesondere auf Makroporen. Makroporen sind für die Effizienzerhöhung eines Katalysators beispielsweise dahingehend nachteilig, dass ein ungünstiges Verhältnis von Oberfläche zu Volumen vorliegt.

In US 2021/0140058 A1 wird ebenfalls ein Verfahren zur Herstellung einer Katalysatorschicht für eine Elektrode offenbart. Hierzu wird zunächst eine Beschichtungslösung bereitgestellt und auf ein Metallsubstrat aufgetragen. Das Metallsubstrat kann vorbehandelt werden, beispielsweise durch Sandstrahlen, chemisches Ätzen oder thermische Sprühverfahren. Dies wird für den Erhalt von Unregelmäßigkeiten (bzw. "Rauigkeiten", *irregularities*) durchgeführt. Weitere Vorbehandlungsschritte umfassen eine Salz- oder eine Säurebehandlung. Anschließend kann die Beschichtungslösung auf das vorbehandelte Substrat aufgetragen und in einem Konvektionstrocken- und/oder Elektroofen wärmebehandelt werden. Eine effiziente Ausgestaltung der Beschichtungslösung auf das Metallsubstrat ist hierbei nur bedingt möglich.

Mithin liegt ein Bedarf vor, eine effiziente Katalysatorschicht zu erhalten, insbesondere im Zusammenhang einer Beschichtung für Elektroden.

### Aufgabe der Erfindung

Die Aufgabe der Erfindung war es daher die Nachteile aus dem Stand der Technik zu beseitigen und eine elektrochemische Zelle bereitzustellen, welche eine hochaktive binderfreie mesoporös templatierte Katalysatorschicht umfasst. Insbesondere war die Aufgabe der Erfindung eine Elektrode für eine derartige elektrochemische Zelle und ein Verfahren zur Herstellung dieser Elektrode bereitzustellen.

### Zusammenfassung der Erfindung

Die erfindungsgemäße Aufgabe wird gelöst durch die Merkmale der unabhängigen Ansprüche. Vorteilhafte Ausgestaltungen der Erfindung sind in den abhängigen Ansprüchen beschrieben.

In einer bevorzugten Ausführungsform betrifft die Erfindung ein Verfahren zur Herstellung einer katalysatorbeschichteten dreidimensional strukturierten Elektrode umfassend die nachfolgenden Schritte:
a) Bereitstellung eines dreidimensional strukturierten Metallsubstrats;
b) Herstellung einer Suspension umfassend ein Templat, einen Metall-Präkursors und ein Lösungsmittel;
c) Auftragen der Suspension auf das dreidimensional strukturierte Metallsubstrat, sodass sich ein Suspensionsfilm auf dem dreidimensional strukturierten Metallsubstrat bildet;
d) Trocknen des Suspensionsfilms auf dem dreidimensional strukturierten Metallsubstrat bei einer Temperatur T₁, in einem Bereich zwischen 18°C-250°C, sodass das Lösungsmittel innerhalb des Suspensionsfilmes verdampft und eine Schicht einer Katalysatorvorstufe mit integrierten Templatstrukturen erhalten wird;
e) thermische Behandlung des die Katalysatorvorstufe umfassenden dreidimensional strukturierte Metallsubstrats bei einer zweiten Temperatur T_{2,} in einem Bereich zwischen 200°C und 1000°C und einer Kalzinierzeit t₂, in einem Bereich zwischen 1 Minute und 1440 Minuten, sodass eine mesoporöse Katalysatorschicht entsteht.

Das erfindungsgemäße Verfahren gestaltet sich als eine Abkehr vom Stand der Technik, denn Katalysatoren werden nicht -wie häufig angewendet- über eine binderbasierte Dispersion mittels geeignetem Verfahren (Sprühen, Pinseln, Siebdrucken, Rakeln) auf ein Substrat aufgetragen, sondern binderfrei und mit definierter Porenstrukturen auf einem dreidimensionales Substrat abgeschieden (Tauchbeschichtung) und anschließend in einem Vollzellmaßstab implementiert. Der Verzicht eines Binders führt dabei vorteilhaft zu keiner Verringerung der volumenbezogenen elektrischen Leitfähigkeit des katalytisch aktiven Materials - entgegen der bekannten Binder umfassenden Katalysatoren aus dem Stand der Technik. Demnach wird mit dem erfindungsgemäßen Verfahren eine höhere Katalysatoreffizienz erhalten. Darüber hinaus führen dicht gepackte Porenstrukturen zu einer rissfreien Beschichtung und im Falle kleiner Mesoporen, zum bestmöglichsten Mittelweg aus Oberfläche und Zugänglichkeit von Edukten und Produkten unter Vermeidung von Diffusionslimitierungen

Es hat sich gezeigt, dass der Einsatz dreidimensional strukturierter Elektroden wesentliche Vorteile in verschieden Anwendungsfällen, insbesondere in der Anwendung innerhalb von elektrochemischen Zellen, mit sich bringt. Dreidimensional strukturierte Elektroden weisen eine besonders große spezifische Oberfläche pro Volumeneinheit auf, welche somit eine verbesserte Interaktion der Elektrode mit einem ihr umgebenen Medium ermöglicht. Insbesondere kann vorteilhafterweise ein verbesserter Gasblasenabtransport ermöglicht werden durch die vergrößerte Oberfläche pro Volumeneinheit. Ein Verfahren zur Herstellung einer dreidimensional strukturierten Elektrode mit einer nanostrukturierten mesoporös templatierten Katalysatorschicht war aus dem Stand der Technik bisher weder bekannt noch nahegelegt.

Wie schon eingangs erörtert, liegt ein wesentlicher Vorteil der vorliegenden Erfindung in der binderfreien Herstellung eines Katalysators. Binder sind üblicherweise notwendig, um eine mechanische Haftung der Partikel eines Katalysatorpulvers sowohl zueinander als auch zu einem Substrat sowie - wie im Falle der Wasserelektrolyse - einen raschen Protonentransport zu gewährleisten. Das erfindungsgemäße Verfahren führt zu kovalent gebundenen Netzwerken des Katalysators, wodurch -binderfrei- ein ausreichender innerer struktureller Zusammenhalt erzeugt wird. Ein wesentlicher Nachteil des Binders besteht in der Herabsetzung der Elektronenleitfähigkeit, wodurch die katalytische Effizienz aktiver Zentren merklich reduziert wird. Ein weiterer Nachteil des Binders ist die Blockierung aktiver Zentren.

Im Sinne der Erfindung ist ein dreidimensional strukturiertes Substrat bevorzugt in der Form ausgestaltet, dass es eine räumliche Struktur, also eine Ausdehnung in jede Raumrichtung, annimmt. Unter der Begriffsfolge ist bevorzugt eine dreidimensionale, d.h. räumliche, Anordnung von Strukturelementen innerhalb (oder auch auf der Oberfläche) eines Substrats zu verstehen. Die Geometrie einer dreidimensionalen Strukturierung zielt vorteilhaft darauf ab, eine erhöhte Oberfläche pro Substratvolumen zu ermöglichen. Dies kann beispielsweise durch regelmäßige Poren, Erhebungen, Vertiefungen, Öffnungen in einem dreidimensionalen Substrat erfolgen. Eine erhöhte Oberfläche führt vorteilhaft zu einer verbesserten Interaktion des Substrats mit seinem umgebenden Medium.

Das dreidimensional strukturierte Metallsubstrat wird bevorzugt in einem dem Verfahren vorgelagerten Schritt gereinigt bzw. vorbehandelt. Insbesondere kann eine derartige Vorbehandlung durch Ätzung bewerkstelligt werden. Dies führt zu einer verbesserten Haftung der später aufgetragenen mesoporösen Katalysatorschicht, da vorteilhaft nicht-gewünschte Oxide und Schmutz entfernt wird. Es versteht sich, dass die Vorbehandlung auch durch weitere Verfahren zur Entfernung von Oxiden und Schmutz erfolgen kann.

Die Kombination der vorliegenden Verfahrensschritte führt zu einem überraschenden Synergieeffekt, der zu den vorteilhaften Eigenschaften und dem damit einhergehenden Gesamterfolg der Erfindung führt, wobei die einzelnen Merkmale in Wechselwirkung zueinander stehen. Ein wichtiger Vorteil des erfindungsgemäßen Verfahrens ist zudem die überaus schnelle, reproduzierbare und wirtschaftliche Syntheseprozedur.

Die Verwendung eines dreidimensional strukturierten Metall-Substrats war für einen Fachmann fernliegend. Aufgrund der thermischen Behandlung innerhalb der Syntheseprozedur, war davon auszugehen, dass das dreidimensional strukturierte Metall-Substrat einen Verzug erleidet. Weiterhin war zu erwarten, dass eine thermische Behandlung des dreidimensionalen Metallsubstrats zu nachteiligen Eigenspannungen und unter Umständen zu Rissen innerhalb des Materials führt. Insbesondere Gitterstrukturen, Netze etc. weisen dünne Maschen auf, die keinen hohen Temperaturen standhalten.

Daher war es für die Erfinder überraschend, dass der Einfluss der aufgetragenen Suspension ein derartiges Materialverhalten im großen Maße verhindert. Es war nicht zu erwarten, dass die aufgetragene Suspension/Katalysatorvorstufe neben den (später -nach der thermischen Behandlung- erhaltenen) vorteilhaften Eigenschaften als hochaktiver Katalysator in elektrochemischen Zellen auch eine Schutzwirkung auf die Elektrode im Zusammenhang mit einer thermischen Behandlung aufweist.

Es hat sich zudem vorteilhaft gezeigt, dass die Suspension an sämtlichen geometrischen Formen (Fortsätzen, Hinterschneidungen, Rundungen, Erhebungen etc.) des strukturierten dreidimensionalen Substrats homogen und gleichmäßig nach dem Auftragen, bevorzugt einer Tauchbeschichtung, vorliegt. Insbesondere im Vergleich mit einem Substrat, welches eine durchgängig planar ausgestaltete Fläche aufweist, führt das dreidimensional strukturierte Substrat zu einer verbesserten Haftung der Suspension.

Überraschend war, dass beim Tauchbeschichten das Auftreten sogenannter Randeffekte nicht besonders ausgeprägt war. Obwohl bekannt ist, dass Randeffekte zu dickeren Filmsegmenten führen können, gelingt bei Einstellung der richtigen Zusammensetzung Beschichtungen mit homogener Schichtdicke zu erhalten.

In weiteren bevorzugten Ausführungsformen kann auch eine Lösung umfassend ein Templat, einen Metall-Präkursor und ein Lösungsmittels in Schritt b) hergestellt werden.

In weiteren bevorzugten Ausführungsformen können auch mehrere Template, Metall-Präkursoren und/oder Lösungsmittel eingesetzt werden. Weiterhin ist bevorzugt das Templat ein Porentemplat.

Der bevorzugte Film kann ausgewählt sein aus einer Gruppe umfassend ein Lösungsfilm (Film durch eine Lösung) oder ein Suspensionsfilm (Film durch eine Suspension).

Ebenfalls ist es bevorzugt, dass in Schritt e) mehrere mesoporöse Katalysatorschichten entstehen.

Es hat sich als vorteilhaft gezeigt, dass die über Tauchbeschichtung hergestellten mesoporösen Beschichtungen besonders gut auf dem Substrat hält. Testungen der Haftung via Tapetest zeigten, dass sie das Schichtmaterial schlecht vom Substrat ablösen lässt. Im Vergleich zeigen beispielsweise besprühte Substrate, die unter den gleichen Bedingungen thermisch behandelt wurden, eine deutlich schlechtere Haftung. Dies kann mit der gleichmäßigen Filmmorphologie erklärt werden. Auch mehrlagige Beschichtungen zeigten eine gute Haftung. Ein weiterer Vorteil ist die Möglichkeit, dass die mesoporösen Beschichtungen sich gut in mehreren Lagen aufbringen lassen. Somit kann beispielsweise bei der Tauchbeschichtung eine gewünschte geometrische Metallbeladung in einem breiten Bereich gezielt eingestellt werden. Die mesoporöse Morphologie hilft dabei eine hohe geometrische Beladung zu erreichen, da die poröse Struktur Verspannungen innerhalb der Schicht besser kompensieren kann. Während der Kalzinierung / der Entfernung des Templates schrumpft der Film entlang der Flächennormalen (es entstehen ellipsoide Poren), dabei werden Spannungen innerhalb der Schicht kompensiert, die zu einem Ablösen der Schicht führen könnten. Dabei war es überraschend, dass durch den bevorzugten Einsatz eines Templats insbesondere mehrlagige mesoporöse Katalysatorschichten bereitgestellt werden konnten, mit der besonders effizient eine Elektrolyse durchführbar war.

Insbesondere der Einsatz eines Metallsubstrats ist vorteilhaft dazu geeignet, geometrisch eine dreidimensional strukturierte Form anzunehmen, wobei das Substrat aufgrund des Werkstoffes (Metall) weiterhin eine ausreichend hohe Steifigkeit aufweist. Dies ermöglicht eine stabile Ausgestaltung eines Substrats, welches Zug und Druckbelastungen standhalten kann und somit für den Einbau in einen Vollzellmaßstab besonders simpel ohne Schäden geeignet ist. Darüber hinaus ist Metall sehr gut bearbeitbar, sodass sämtliche geometrische Formen durch das Metallsubstrat angenommen werden können.

In einer bevorzugten Ausführungsform umfasst das Metallsubstrat ein Metall ausgesucht aus der Gruppe umfassend: Nickel, Silber, Titan, Eisen, Mangan, Kobalt, Gold, Iridium, Kupfer, Platin, Palladium, Osmium, Rhodium, Ruthenium, Aluminium, Wolfram, Zinn, Zink, Blei, Germanium, Silizium sowie deren Legierungen. Die vorgenannten Materialien sind vorteilhaft, weil diese im Allgemeinen eine gute elektrische Leitfähigkeit, zugleich aber auch durch eine gute chemische Stabilität gegenüber einen umgebenen Medium, insbesondere im Einsatz von Elektrolysezellen oder Galvanischen Zellen, aufweisen. Es versteht sich, dass das Metallsubstrat auch Kombinationen vorgenannter Materialien umfasst.

In einer bevorzugten Ausführungsform ist das Verfahren dadurch gekennzeichnet, dass mesoporöse Katalysatorschichten auf dreidimensional strukturierten Ti-Substraten mit unterschiedlicher Geometrie hergestellt werden. Gerade Ti-Substrate sind bevorzugt geeignet, da sie über eine natürliche dünne Oxidschicht auf der Oberfläche verfügen. Beschichtet man nun diese Substrate, können auf der Substratoberfläche vorhandene Sauerstofffunktionen während der thermischen Behandlung eine kovalente und/oder ionische Bindungen mit der Katalysatorschicht eingehen, wodurch starke mechanische Haftung resultiert.

In einer bevorzugten Ausführungsform umfasst das Metallsubstrat auch weitere elektrisch leitfähige Materialien ausgesucht aus der Gruppe umfassend Glaskohlenstoff, Bor-dotierter-Diamant, Carbide, Nitride, Oxide. Diese liegen bevorzugt in kleineren Mengen im Metallsubstrat vor, wobei kleinere Mengen ein Bereich von bevorzugt kleiner Volumenprozente des Gesamtsubstrats beschreibt. In weiteren bevorzugten Ausführungsformen umfasst das Metallsubstrat im Wesentlichen vollständig einen oder mehrere der genannten elektrisch leitfähigen Materialien.

Bevorzugt ist die synthetisierte mesoporöse Katalysatorschicht nanostrukturiert. Unter einer Nanostrukturierung ist bevorzugt die Strukturierung eines Festkörpers auf atomarem Niveau zu verstehen. Durch gezielte Modifikation (Implantation) werden atomare, chemische usw. meist oberflächennahe Festkörpereigenschaften verändert.

Eine nanostrukturierte mesoporöse Katalysatorschicht ist bevorzugt als eine geordnete Nanostruktur der mesoporösen Katalysatorschicht zu verstehen. Das bedeutet, dass einer Katalysatorschicht wiederholend (periodisch) in gleicher Weise in etwa gleiche Strukturelemente umfasst sind (bspw. aneinandergereiht). Es hat sich überraschend gezeigt, dass die Ausbildung einer geordneten Mesostruktur durch die geometrische Ausgestaltung (bspw. Wölbung, Vertiefung) der Substratoberfläche nicht gestört wird.

Weiterhin bevorzugt wird ein oder mehrere Metallsalze als Katalysatorvorstufe zusammen mit einem oder mehreren Template in einem oder mehreren geeigneten Lösungsmitteln dispergiert und diese Mischung auf das dreidimensionale Metallsubstrat überführt. Das nachfolgende Verdampfen des Lösungsmittels führt zu einer vorteilhaften periodischen Anordnung des Templats umgeben von einer Katalysatorvorstufe. Eine anschließende thermische Behandlung bei bevorzugten Temperaturen zwischen 300 °C - 800 °C verbrennt das Templat und überführt die Vorstufe in den eigentlichen Katalysator, bevorzugt ein Metalloxid. Durch die Entfernung des Templats entstehen Poren, die miteinander verknüpft sind und besonders vorteilhaft eine hohe Oberfläche für katalytische Prozesse zur Verfügung stellen.

Der bevorzugte Syntheseansatz basiert auf Templaten die als Platzhalter für ein gewünschtes Porengefüge dienen. Während der Synthese wird das Templat vom umgebenden Material (Katalysatorvorstufe) eingeschlossen und hinterlässt nach Entfernung ein definiert poröses Material. Abhängig von der Templatgröße entstehen Porenstrukturen mit Porengrößen von einigen Mikrometern bis zu wenigen Nanometern. Materialien mit einer geordneten Porenstruktur und einer monomodalen Porengrößenverteilung können demnach bevorzugt über sogenannte Templatierungsverfahren synthetisiert werden. Bei diesem Syntheseansatz dienen Template als Platzhalter für die gewünschte Porenform. Durch den Einsatz eines Templats konnte eine besonders vorteilhafte Porenmorphologie der Katalysatorschicht bereitgestellt werden. Insbesondere konnte die Katalysatorschicht als mesoporös ausgestaltet werden, wodurch eine besonders hohe mechanische Stabilität erreicht werden konnte. Weiterhin war der Einsatz des Templats dahingehend von Vorteil, dass eine gezielt einstellbare, reproduzierbar generierbare Porenverteilung mit besonders hoher spezifischer Oberfläche der Katalysatorschicht bereitgestellt werden konnte. Insbesondere im Hinblick auf technische Anwendungen stellt die Reproduzierbarkeit einen besonders ausgeprägten Vorteil dar.

In weiteren bevorzugten Ausführungsformen umfasst das Templat bevorzugt Tenside, Block-Copolymere und/oder dendritische Kern-Schalenpolymere. Das Templat führt zu vorteilhaften mesoporösen Strukturierungen innerhalb der Katalysatorschicht, wobei das Templat Mizellen bilden oder aber auch andere Strukturierungen aufweisen kann. Das Templat kann in weiteren Alternativen auch ein nicht Mizellen bildendes Kern-Schale-Makromolekül, gewissermaßen eine unimolekulare Mizelle, umfassen. Weiterhin können Block-Copolymere auch lamellare Strukturen annehmen.

In einer bevorzugten Ausführungsform sind Template als Softtemplate ausgestaltet. Softtemplate sind verformbare strukturdirigierende Einheiten. Dies können Mizellen oder lamellare Strukturen aus amphiphilen Polymeren (oftmals Block-Copolymere) sein. Typischerweise entstehen die Mizellen oder Lamellen oberhalb einer kritischen Konzentration eines in einem Lösungsmittel dispergierten Polymers. Zu den Softtemplaten gehören auch dendritische oder hyperverzweigte Kern-Schalenpolymere, wobei Kern und Schale der Polymere unterschiedliche Hydrophilizitäten zeigen, somit auch amphiphil sind.

In einer weiteren bevorzugten Ausführungsform sind Template als Hardtemplate ausgestaltet. Hardtemplate sind starre sturkturdirigierende Einheiten. Zu nanostrukturierte Hardtemplaten zählen Metalle, Oxide, oftmals Siliziumoxide (z.B. MCM-Gruppe, SBA-Gruppe, FDU-Gruppe, KIT-Gruppe, MSU-Gruppe, TUD-Gruppe, HMM-Gruppe, FSM-Gruppe) sowie Kohlenstoffe (z.B. CMK-Gruppe). Es kann sich bei diesen Hardtemplaten um einzelne Nanopartikel oder um nanostrukturierte größere Gebilde handeln.

Der bevorzugte Verfahrensschritt der Trocknung kann in einer bevorzugten Variante auch so ausgestaltet sein, dass die Trocknung in sehr kurzer Zeit erfolgt. Zum Beispiel in einem Zeitbereich vom Auftragen der Suspension oder der Lösung auf das Metallsubstrat bis hin zur thermischen Behandlung. In der Praxis kann sich der Zeitbereich bspw. folgendermaßen ereignen: Herausziehen des dreidimensionalen Metallsubstrats aus einem Behältnis umfassend der Lösung oder Suspension und direktes Einlegen in einen Ofen zur thermischen Behandlung. Ein derartige Durchführen des Trocknungsvorgangs führt einer besonders schnell durchführbaren Synthese der Katalysatorschicht auf das dimensional strukturierte Metall-Substrat.

In einer weiteren bevorzugten Ausführungsform des Verfahrensschritts der Trocknung kann der Zeitbereich vom Auftragen der Suspension oder der Lösung auf das Metallsubstrat bis hin zur thermischen Behandlung wie folgt ablaufen: Herausziehen des dreidimensionalen Metallsubstrats aus einem Behältnis umfassend der Lösung oder Suspension, Trocknen an der Luft (bspw. für ca. 5 Minuten), daraufhin eine thermische Behandlung, um vorteilhaft verbleibendes Lösungsmittel im Wesentlichen vollständig zu entfernen und/oder die Beschichtung zu stabilisieren.

In einer weiteren bevorzugten Ausführungsform ist das Verfahren dadurch gekennzeichnet, dass das Auftragen der Lösung oder Suspension aus Schritt (c) anhand einer Tauchbeschichtung erfolgt. Es war nicht naheliegend für den Fachmann, dass durch eine Tauchbeschichtung ein dreidimensional strukturiertes Metallsubstrat mit einer homogenen Katalysatorschicht versehen werden kann, die eine templatierte Porenstruktur aufweist. Eine templatierte Porenstruktur meint bevorzugt den Erhalt einer Porenstruktur (Struktur umfassend Poren) unter Einsatz eines Templats. Ein weiterer Vorteil einer Tauchbeschichtung ist der, dass insbesondere auch Hinterschneidungen eines dreidimensional strukturierten Metallsubstrats in einfacher Weise beschichtet werden können.

Mit der Tauchbeschichtung gehen noch weitere Vorteile einher. Es lassen sich zum Beispiel gleichzeitig mehrere dreidimensional strukturierten Metallsubstrate beschichten, was eine besonders wirtschaftliche Produktion ermöglicht. Weiterhin weist eine Tauchbeschichtung eine vorteilhaft sehr kurze Prozesszeit auf, denn ein kurzes Eintauchen in die Lösung oder Suspension ist vorteilhaft schon ausreichend um eine bevorzugte Katalysatorschicht zu erhalten. Darüber hinaus ist eine Tauchbeschichtung sehr ressourcenschonend, da keine Materialverschwendung stattfindet (Lösung oder Suspension ist in einem Behälter). Weiterhin kann es bevorzugt sein, dass die Tauchbeschichtung derart erfolgt, dass das Substrat in einem Behältnis vorgelegt und die Lösung hinein- und wieder heraus transportiert wird.

In einer bevorzugten Ausführungsform ist das Verfahren dadurch gekennzeichnet, dass das dreidimensional strukturierte Metallsubstrat als ein Netz, Schaum, Gitter, Sieb, Gewebe und/oder Geflecht ausgestaltet ist.

Besonders bevorzugt ist dreidimensional strukturierte Metallsubstrat in Form eines Netzes oder eines Gitters ausgeführt. Die bevorzugten und besonders bevorzugten Ausführungsformen als Netz oder Gitter sind vorteilhaft, weil solche Ausführungsformen einfach aus den oben beschriebenen Materialien bezogen werden können. Ferner führen derartige Ausgestaltungen vorteilhaft dazu, dass die Metallsubstrate in simpler Weise verformt werden können.

In einer bevorzugten Ausführungsform ist das Verfahren dadurch gekennzeichnet, dass die Temperatur T₂ in einem Bereich liegt zwischen 200°C und 1000°C, bevorzugt zwischen 300°C und 800°C, und die Kalzinierzeit t₂ in einem Bereich liegt zwischen 1 Minute und 1440 Minuten, insbesondere zwischen 10 Minuten bis 120 Minuten, bevorzugt zwischen 10 Minuten bis 60 Minuten. Gerade innerhalb der beschriebenen Parameter kann das Templat vorteilhaft vollständig verbrennen, sodass eine nanostrukturierte mesoporöse Katalysatorschicht erhalten wird.

In einer weiteren bevorzugten Ausführungsform kann das Templat auch aus der Katalysatorvorstufe mit einem geeigneten Medium herausgelöst/herausgeschwemmt werden. Es versteht sich, dass auch eine Kombination aus Wärmebehandlung und Herauslösen der Template über ein Medium nacheinander erfolgen kann. Sofern Template über ein Medium herausgelöst werden - ohne zu verbrennen - können diese Templatstrukturen bevorzugt weiter verarbeitet und/oder wiederverwendet werden.

Um das Templat thermisch zu zersetzten und die anorganische Spezies in ein kristallines Metalloxid umzuwandeln, wird die Katalysatorvorstufe bevorzugt kalziniert.

Die Kalzinierung führt zu einem drastischen Volumenverlust der Schicht, verursacht durch die Umwandlung des Vorläufers ins Oxid, der Verbrennung des Templats und der Umwandlung der amorphen Porenwand zu einem kristallinen Material. Da die Haftung der Schicht auf dem Substrat vergleichsweise stark ist, u.a. durch kovalente Bindungen zwischen der Substratoberfläche und der Metalloxid-Spezies, kommt es zu einer Kontraktion der Schicht ausschließlich senkrecht zum Substrat, ohne dass die Schicht reißt.

Alle in diesem Dokument offenbarten Parameterbereiche, wie bspw. Temperaturen, Kräfte, Drücke, Abstände etc., umfassen selbstverständlich alle Werte innerhalb der angegebenen Bereiche sowie deren maximalen und minimalen Grenzwerte. Es ist für einen Fachmann ersichtlich, dass die Werte auch gewissen Schwankungen unterliegen. Im vorliegenden Fall handelt sich demnach um einen Temperaturbereich von etwa 200°C bis 1000°C, und bevorzugt etwa 300°C bis 800°C und einer Kalzinierzeit von bevorzugt etwa 1 Minute bis 1440 Minuten, insbesondere etwa 10 bis 120 Minuten. Dies lässt sich auch auf alle weiteren Parameterbereiche des Dokumentes analog übertragen.

Begriffe wie "im Wesentlichen", "ungefähr", "etwa", "ca." etc. beschreiben bevorzugt einen Toleranzbereich von weniger als ± 40%, bevorzugt weniger als ± 20%, besonders bevorzugt weniger als ± 10 %, noch stärker bevorzugt weniger als ± 5% und insbesondere weniger als ± 1% und umfassen stets den exakten Wert. "Ähnlich" beschreibt bevorzugt Größen die "ungefähr gleich" sind. "Teilweise" beschreibt bevorzugt zu mindestens 5 %, besonders bevorzugt zu mindestens 10 %, und insbesondere zu mindestens 20 %, in einigen Fällen zu mindestens 40 %.

In einer bevorzugten Ausführungsform findet die thermische Behandlung in Erwärmungsanlagen statt. Zur Entfernung des Templats kann beispielsweise ein Rohrofen im Luftstrom oder Muffelofen verwendet werden. Derartige Öfen weisen eine gleichmäßige Temperaturverteilung auf, sodass die Wiederholbarkeit des Verfahrens vorteilhaft gegeben ist. Ferner kann die Abwärme der Öfen vorteilhaft für weitere Verfahrensschritte (z.B. Trocknung) verwendet werden, um damit einhergehend Energie zu sparen.

In einer weiteren bevorzugten Ausführungsform kann die thermische Behandlung auch - anstelle einer Erwärmung durch einen Ofen - mit weiteren folgenden Verfahren erfolgen. Bevorzugt wird das Katalysatorvorstufen umfassenden Substrat über Rapid Thermal Annealing (RTA) mit der Abwärme einer Halogenlampe thermisch behandelt. Weiterhin bevorzugt wird das Katalysatorvorstufen umfassenden Substrat über ein Flash-Lamp Annealing erwärmt. Dies führt vorteilhaft zu einer schnellen Aufheizung und einer ausschließlichen Erhitzung der Oberfläche. Darüber hinaus ist das Verfahren Laser Annealing ebenso bevorzugt. Dieses Verfahren führt zu einer noch schnelleren Erwärmung des Katalysatorvorstufen umfassenden Substrats, wobei eine sehr geringe Eindringtiefe erreicht wird und ausschließlich die Oberfläche erhitzt wird. Möglich wäre die Erhitzung eines geeigneten Substrates mit einem Induktionsofen. Auch dies führt zu einer sehr schnellen Erhitzung. Ebenso kann es bevorzugt sein, die Erwärmung durch einen Infrarotstrahler vorzunehmen.

In einer bevorzugten Ausführungsform ist das Verfahren dadurch gekennzeichnet, dass die Temperatur T₁ in einem Bereich zwischen 18°C -250°C liegt. Das Trocknen der Schicht auf dem dreidimensionale Metall-Substrat kann im Temperaturbereich von der Raumtemperatur bis 80°C stattfinden. Dadurch wird vorteilhaft nur sehr wenig Energie aufgebracht. Zudem reicht für derartige Temperaturen die Abwärme der Erwärmungsanlagen als Trocknungsenergie um ein schnelles Trocknen des Suspensionsfilms zu erhalten. Dies führt darüber hinaus zu großen wirtschaftlichen Ersparnissen des Verfahrens.

In einer bevorzugten Ausführungsform ist das Verfahren dadurch gekennzeichnet, dass die Suspension ein oder mehrere amphiphile Block-Copolymere umfasst.

Für die Templatierung von geordnet mesoporösen Katalysatorschichten werden bevorzugt amphiphilen Blockcopolymere verwendet, die einen hydrophilen Polyethylenoxidblock (PEO) aufweisen

Bevorzugte Template für die Synthese von geordnet mesoporösen Feststoffen sind amphiphile Moleküle. Diese bilden vorteilhaft durch Selbstorganisation Mizellen aus und ordnen sich zu flüssigkristallinen Phasen. Diese Flüssigkristalle, mit einer Nanostrukturierung von typischerweise 2 nm bis 50 nm, dienen bevorzugt als Endotemplate bei der Synthese von mesoporösen Oxiden.

In einer weiteren bevorzugten Ausführungsform wird das Katalysatorvorstufen umfassenden dreidimensional strukturierte Metallsubstrats in einer inerten Atmosphäre thermisch behandelt. Die Block-Copolymer-Substrate zersetzen sich nämlich auch in inerten Atmosphären bei Temperaturen oberhalb von 300°C.

In einer bevorzugten Ausführungsform ist das Verfahren dadurch gekennzeichnet, dass das amphiphile Block-Copolymer ausgewählt ist aus der Gruppe bestehend aus AB-Block Copolymeren (Polyethylenoxid-block-polystyrene (PEO-PS), Polyethylenoxid-block-polymethylmethacrylat (PEO-PMMA), Poly-2-venlypyridin-block-polyallylmethacrylat (P2VP-PAMA), Polybutadien-bock-polyethyleneoxid (PB-PEO), Polyisopren-bock-polydimethylaminoethylmetacrlyt (PI-PDMAEMA), Polybutadien-bock-polydimethylaminoethylmetacrlyt (PB-PDMAEMA), Polyethylen-block-polyethylenoxid (PE-PEO), Polyisobutylen-block-po-lyethylenoxid (PIB-PEO) und Poly(ethylen-co-buty-len)-block-poly(ethylenoxid) (PEB-PEO), Polystyrol-block-poly(4-vinylpyridin) (PS-P4VP), Polyisopren-block-polyethyleneoxid (PI-PEO), Polydimethoxyanilin-block-polystyrol (PDMA-PS), Polyethylenoxid-block-poly-n-utylacrylat (PEO-PBA), Polybutadien-bock- poly(2-vinylpyridin (PB-P2VP)), Polyethylenoxid-block-polylactid (PEO-PLA), Polyethylenoxid-block-polyglycolid (PEO-PLGA), Polyethylenoxid-block-polycaprolacton (PEO-PCL), Polyethylen-block-polyethylenglycol (PE-PEO), Polystyrol-block-polymethylmethacrlyt (PS-PMMA), Polystyrol-block-polyacrylsäure (PS-PAA), polypyrrol-block-polycaprolacton (PPy-PCL), Polysilicon-block-polyetylenoxid (PDMS-PEO), ABA-Block Copolymeren (Polyethylenoxid-block-polybutadien-block-polyethylenoxid (PEO-PB-PEO), Polyethylenoxid-block-polypropylenoxid-block-polyethylenoxid (PEO-PPO-PEO), Polypropylenoxid-block-polyethylenoxid-block-polypropylenoxid (PPO-PEO-PPO), Polyethylenoxid-block-polyisobutylen-block-polyethylenoxid (PEO-PIB-PEO), Polyethylenoxid-block-polybutadien-block-polyethylenoxid (PEO-PB-PEO)), Polylactid-block-polyethylenoxid-block-polylactidd (PLA-PEO-PLA), Polyglycolid-block-polyethylenoxid-block-polyglycolid (PGLA-PEO-PGLA), Polylactid-cocaprolacton-block-polyethylenoxid-block-polylactid-co-caprolacton (PLCL-PEO-PLCL), Polycaprolacton-blockpolytetrahydrofuran-blockpolycaprolacton (PCL-PTHF-PCL), Polypropylenoxid-block-Polyethylenoxid-block-polypropylenoxid (PPG-PEO-PPG), Polystyrol-block-polybutadien-block-polystyrol (PS-PB-PS), Polystyrol-blockpolyethylen-ran-butylen-block-polystyrol (PS-PEB-PS), Polystyrol-block-polyisopren-block-polystyrol (PS-PI-PS), ABC-Block Coplymeren (Polyisopren-block-polystyrol-block-polyethyleneoxid (PI-PS-PEO), Polystyrol-block-Polyvinylpyrrolidon-block-polyethyleneoxid (PS-PVP-PEO), Polystyrol-block-poly-2-venylpyridin-block-polyethylenoxid (PS-P2VP-PEO), Polystyrol-block-poly-2-venylpyridin-block-polyethylenoxid (PS-P2VP-PEO), Polystyrol-block-polyacrylsäure-polyethylenoxid (PS-PAA-PEO)), Polyethylenoxid-block-polylactid-block-decan (PEO-PLA-decan), sowie anderen amphiphilen Polymeren (Polyethylenoxid-alkylether (PEO-Cₓₓ), z.B. Brij35, Brij56, Brij58) oder Gemischen dieser, vorzugsweise PEO-PB, PEO-PPO, PEO-PB-PEO, PEO-PPO-PEO.

In einer bevorzugten Ausführungsform ist das Verfahren dadurch gekennzeichnet, dass als Metall-Präkursor ein Metallsalz oder mehrere Metallsalze jeweils unterschiedlicher Metalle, oder deren Hydrate, eingesetzt werden.

In weiteren bevorzugten Ausführungsformen können auch Metallnanopartikel als Metall-Präkursor eingesetzt werden, die mit Hilfe von Polymertemplaten mesoporöstemplatiert als Schicht abgeschieden werden können. Metallnanopartikel sind vorteilhaft ggf. als Abfallprodukte aus der Industrie zu erhalten und demnach in einem Recycle-Prozess wieder zu verwerten.

In einer bevorzugten Ausführungsform ist das Verfahren dadurch gekennzeichnet, dass die Metallsalze ausgewählt sind aus der Gruppe bestehend aus Metallnitrat, Metallhalogenid, Metallsulfat, Metallacetat, Metallcitrat, Metallalkoxid oder deren Gemischen.

In alternativen Ausführungsformen sind auch weitere Salze einsetzbar sofern sie im geeigneten Lösungsmittel, ggf. unter Zugabe weiterer komplexierender Stoffe, löslich sind.

In einer bevorzugten Ausführungsform ist das Verfahren dadurch gekennzeichnet, dass die im Metall-Präkursor enthaltenen Metalle ausgewählt sind aus der Gruppe bestehend aus Alkalimetallen, vorzugsweise Lithium, Natrium, Kalium, Rubidium, Cäsium, Erdalkalimetallen, vorzugsweise Magnesium, Calcium, Strontium, Barium, Metallen der dritten Hauptgruppe des Periodensystems, vorzugsweise Bor, Aluminium, Indium, Gallium, Thallium, Metallen der vierten Hauptgruppe des Periodensystems, vorzugsweise Zinn, Silicium, Germanium, Blei, Metallen der fünften Hauptgruppe des Periodensystems, vorzugsweise Bismut, und Übergangsmetallen, vorzugsweise Iridium, Ruthenium, Cobalt, Zink, Kupfer, Mangan, Cadmium, Vanadium, Yttrium, Zirkonium, Scandium, Titan.

In einer bevorzugten Ausgestaltung ist das Verfahren dadurch gekennzeichnet, dass Ruthenium und/oder Iridium und/oder Titan als Metall-Präkursor verwandet werden. Insbesondere die Kombination der Metalle führt zu einer Katalysatorschicht, welche eine hohe Integrität und Stabilität aufweist. Ruthenium und Iridium-basierte Schichten zeigen in den Anwendungen Sauerstoffevolution und Chlorevolution eine hohe Aktivität. Auch verbessert die Anwesenheit von Titanoxid in der Schicht die Stabilität und die Haftung auf dem Titansubstrat.

In einer bevorzugten Ausführungsform ist das Verfahren dadurch gekennzeichnet, dass mesoporöse Ru- und Ir-haltige Katalysatorschichten auf dreidimensional strukturierte Ti-Substrate mit unterschiedlicher Geometrie synthetisiert werden.

In einer bevorzugten Ausführungsform ist das Verfahren dadurch gekennzeichnet, dass als Lösungsmittel Wasser oder ein C1-C4-Alkohol, C2-C4-Ester, C2-C4-Ether, Formamid, Acetonitril, Aceton, Tetrahydrofuran, Benzyl, Toluol, Dimethylsulfoxid, Dichlormethan, Chloroform oder deren Mischungen eingesetzt werden, vorzugsweise Methanol, Ethanol, Formamid und/oder Tetrahydrofuran.

Die Vorteile und bevorzugten Ausführungsformen des erfindungsmäßen Verfahrens sind analog auf die erfindungsgemäße Elektrode, sowie die erfindungsgemäßen elektrochemischen Zellen zu übertragen und umgekehrt.

In einer bevorzugten Ausführungsform betrifft die Erfindung eine Elektrode für eine elektrochemische Zelle, bevorzugt hergestellt nach dem oben erwähnten Verfahren, dadurch gekennzeichnet, dass die Elektrode ein dreidimensional strukturiertes Metallsubstrat ist und eine nanostrukturierte mesoporöse Katalysatorschicht umfasst.

In elektrochemischen Zellen ist es üblich - insbesondere bei der Wasserspaltung im Vollzellmaßstab -, dass Katalysatoren in Form von dispergierten Pulvern zusammen mit einem Binder auf eine Nafion-Membran gesprüht und im Anschluss in die elektrochemischen Zellen, bevorzugt Elektrolyseur, eingebaut werden. Es waren daher umfangreiche (erfinderische) Überlegungen erforderlich, die dazu führten eine dreidimensional strukturierte Elektrode mit einer nanostrukturierten mesoporösen Katalysatorschicht statt Katalysatorpulvern in eine elektrochemische Zelle einzubringen.

Eine Elektrode umfassend eine nanostrukturierte mesoporöse Katalysatorschicht führt zu wesentlichen Vorteilen. So ist die höhere Massenaktivität der Spezies einer mesoporösen Katalysatorschicht nachgewiesen worden (vgl. auch Fig. 4).

Eine derartige Elektrode ist darüber hinaus vorteilhaft, weil diese durch die poröse oder offenporige Ausführung eine besonders große spezifische Oberfläche pro Bauteilvolumen aufweist und zusätzlich eine hohe mechanische Stabilität aufweist, die die gesamte elektrochemischen Zelle stabilisiert.

Insbesondere eine nanostrukturierte mesoporöse Katalysatorschicht ist mit wesentlichen Vorteilen verbunden. Es hat sich gezeigt, dass im Halbzellenmaßstab mesoporös templatierte Katalysatorschichten eine deutlich höhere Massenaktivität der elektrochemisch aktiven Spezies aufweisen als vergleichbare herkömmliche Katalysatorschichten, die bspw. über eine Ink-basierte Methode hergestellt wurden. Vorteilhaft konnte die bevorzugt mesoporöse Ausgestaltung der Katalysatorschicht durch eine thermische Behandlung der Katalysatorvorstufen bereitgestellt werden unter Einsatz eines Templats, bevorzugt eines Softtemplats.

In einer weiteren bevorzugten Ausführungsform ist die Elektrode dadurch gekennzeichnet, dass das dreidimensional strukturiertes Metallsubstrat als ein Netz, Schaum, Gitter, Gewebe und/oder Geflecht ausgestaltet ist.

In einer weiteren bevorzugten Ausführungsform betrifft die Erfindung eine elektrochemische Zelle umfassend einen binderfreien Katalysator.

In einer bevorzugten Ausführungsform umfasst die elektrochemische Zelle eine Elektrode nach der oben genannten Art. Vorteil der erfindungsgemäßen Elektrode ist insbesondere das Aufweisen eines binderfreien Katalysators mit einer im Wesentlichen homogenen Porenstruktur. Dies führt zu einem optimaler Stofftransport von Edukten und Produkten und entsprechen zu einer höheren katalytischen Aktivität.

Bevorzugt ist eine elektrochemische Zelle ausgesucht aus der Gruppe umfassend: Batterie, Akkumulator, Brennstoffzelle, Elektrolyseur.

Die Anwendung einer erfindungsgemäßen Elektrode ist weiterhin bevorzugt im Zusammenhang mit der Elektrolyse zur Herstellung von Chlor möglich.

Weiterhin können dreidimensional strukturierte Substrate in der Medizintechnik eingesetzt werden, wobei essentiell für derartige Substrate ist, dass diese die erhöhten Temperaturen der thermischen Behandlung standhalten. Mesoporöse Materialien können dabei als Wirkstoffträger verwendet werden. Makromoleküle werden im porösen System gespeichert und können über einen längeren Zeitraum verteilt als Wirkstoff an geeigneter Stelle abgegeben werden. Hier ist die gezielte Einstellbarkeit der Porosität und des Materials ein wichtiger Vorteil.

### FIGUREN

Im Folgenden soll die Erfindung an Hand von Figuren näher erläutert werden, ohne auf diese beschränkt zu sein.

### Kurzbeschreibunq der Abbildungen

- **Fig. 1**: Schematische Ablaufdarstellung eines bevorzugten Verfahrens zur Herstellung einer katalysatorbeschichteten dreidimensional strukturierten Elektrode
- **Fig. 2**: REM-Darstellung in Gegenüberstellung von Titannetzen vor (A) und nach (B) einer Beschichtung mit mesoporösen Iridiumoxidschichten
- **Fig. 3**: Schematische Ablaufdarstellung eines bevorzugten Verfahrens zur Herstellung einer katalysatorbeschichteten dreidimensional strukturierten Elektrode in Gegenüberstellung mit einem Verfahren aus dem Stand der Technik
- **Fig. 4**: Darstellung in einem Diagramm der elektrokatalytische Aktivität als cyclovoltametrische (CV) Messung von zwei Katalysatorsystemen in einem Wasserelektrolyseur
- **Fig. 5**: Darstellung in einem Diagramm für eine erhöhte katalytische Aktivität eines Elektrodennetzes mit einer mesoporös templatierten Katalysatorschicht in der Chlorherstellung

### Detaillierte Beschreibung der Abbildungen

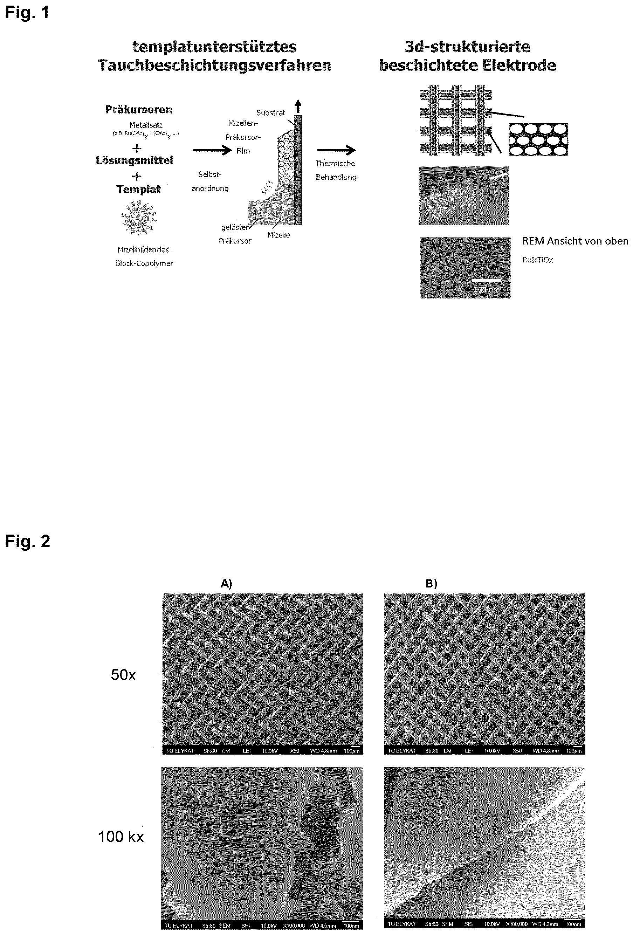

**Fig. 1** illustriert schematisch den Ablauf eines bevorzugten Verfahrens zur Herstellung einer katalysatorbeschichteten dreidimensional strukturierten Elektrode. Das Verfahren umfasst bevorzugt ein templatunterstütztes Tauchbeschichtungsverfahren. Hierbei wird insbesondere in einem ersten Verfahrensschritt eine Lösung erzeugt. Die Lösung umfasst Präkursoren, Lösungsmittel und ein Templat. Stark bevorzugt wird ein Metallsalz - bspw. Ru(OAc)₃ oder Ir(OAc)₃ - als Präkursor verwendet. Als Templat wird bevorzugt ein Mizellen bildendes Block-Copolymer verwendet. Nach der Herstellung der Lösung wird eine dreidimensional strukturierten Elektrode in die Lösung getaucht, sodass sich beim Herausziehen der Elektrode ein Film auf der Oberfläche ausbilden kann. Das Lösungsmittel verdampft bevorzugt schon bei Raumtemperatur, sodass die Elektrode schon nach kurzer Zeit eine Katalysatorvorstufe mit integrierten Mizellen auf Ihrer Oberfläche aufweist. Ausgehend von der Selbstanordnung der Mizellen bildet sich eine geordnete Nanostruktur auf der Oberfläche der dreidimensional strukturierten Elektrode. In einer abschließenden thermischen Behandlung wird die Katalysatorvorstufe in eine Katalysatorschicht überführt. Die thermische Behandlung führt zu einer Verbrennung des Mizellen bildenden Templats, sodass eine nanostrukturierte mesoporöse Katalysatorschicht entsteht. Die REM-Aufnahme zeigt eine mesoporös templatierte bei 450 °C kalzinierte RuIrTiOₓ Schicht auf einem Titannetz in Draufsicht.

**Fig. 2** ist die Darstellung von REM-Aufnahmen von Titannetzten, die bevorzugt als Gasdiffusionsschichten eingesetzt werden können. Insbesondere zeigt die Aufnahme ein Titantnetz vor (A) und nach (B) einer Beschichtung mit mesoporösen Iridiumoxidschichten. Die oberhalb angeordneten Darstellungen zeigen die Netze bei 50-facher Vergrößerung. Die unterhalb angeordneten Darstellungen zeigen hingegen die Netze bei 100.000-facher Vergrößerung. Die Beschichtung wurde bei 400 °C in Luft kalziniert.

**Fig. 3** zeigt eine schematische Ablaufdarstellung eines bevorzugten Verfahrens zur Herstellung einer katalysatorbeschichteten dreidimensional strukturierten Elektrode in Gegenüberstellung mit einem Verfahren aus dem Stand der Technik. Im Stand der Technik wird ein Ink hergestellt. Eine Dispersion umfassend bevorzugt Isopropanol (ⁱPrOH), Nafion, Wasser und ein Katalysatorpulver werden mittels Ultraschall zu einem Ink gemischt wird. Anschließend wird ein Substrat, wie zum Beispiel eine Nafionmembran, mit dem Ink beschichtet. Bevorzugt wird das Substrat über Sprühen beschichtet. In einem letzten Schritt wird die Membran in den Vollzellmaßstab eingebracht.

Das erfindungsgemäße Verfahren nutzt hingegen bevorzugt eine Tauchbeschichtung. Zunächst wird eine Suspension generiert, welche zum Beispiel Ethanol, ein Mizellen bildendes Templat und ein Edelmetallsalz, nämlich Ir(OAc)₃ umfasst. Anschließend wird ein dreidimensionales Substrat in ein Behältnis mit der beschrieben Suspension eingetaucht. Das Herausziehen des dreidimensionalen Substrates aus der Suspension führt zu einer auf dem Substrat aufweisenden Schicht einer Katalysatorvortufe. Anhand einer thermischen Behandlung wird im folgend eine Katalysatorschicht gebildet und in einem letzten Verfahrensschritt wird das dreidimensionale Substrat in einen Vollzellenmaßstab eingebracht.

**Fig. 4** zeigt die elektrokatalytische Aktivität einer mit mesoporösen Iridiumoxid beschichteten CCG (catalyst coated gas diffusion layer) als Anode in Kontakt mit einer Membran. Die Membran ist auf der Kathodenseite mit gängigem Pt/C Katalysator beschichtet (einseitig beschichtete CCM). Verglichen wird das Setup mit einer kommerziell verfügbaren CCM (catalyst-coated membrane) mit dem gleichen Pt/C Katalysator auf der Kathodenseite und einer binderhaltigen Ir-Schicht (beidseitig beschichtete CCM) als Referenzsystem. Das CCG-System erreicht eine etwa doppelt so hohe geometrische Stromdichte im Vergleich zur binderhaltigen kommerziellen Referenz.

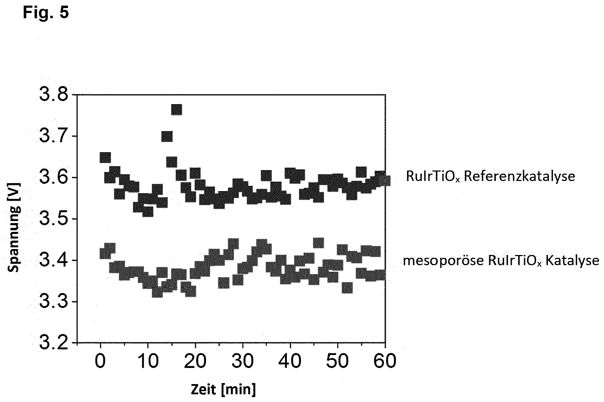

Die in **Fig. 5** illustrierte Punktdiagramm-Darstellung zeigt eine erhöhte katalytische Aktivität von dreidimensional strukturierten Elektroden mit mesoporös templatierten Katalysatorschichten in der Chlorherstellung. Hierbei wurde zum Vergleich ein Referenzkatalysator angewendet, wobei eine dreidimensional strukturierten Elektrode mit einem herkömmlichen Syntheseverfahren beschichtet wurde und daher keine templatiert mesoporöse Katalysatorschicht umfasst.

Folgende Randbedingungen wurden für den Vergleich herangezogen: 80°C; NaCl (300 g/l) an der Anode; NaOH (400 g/l) an der Kathode; chronopotentiometrische Messungen bei 350 mA/cm²; Kathode: kommerzieller Katalysator auf Ni-Netz; Membran: N982WX; Anode: Katalysatorbeschichtung auf Ti-Netz

## Patentansprüche

1. Verfahren zur Herstellung einer katalysatorbeschichteten dreidimensional strukturierten Elektrode
umfassend die nachfolgenden Schritte:
a) Bereitstellung eines dreidimensional strukturierten Metallsubstrats;
b) Herstellung einer Suspension umfassend ein Templat, einen Metall-Präkursor und ein Lösungsmittel;
c) Auftragen der Suspension auf das dreidimensional strukturierte Metallsubstrat, sodass sich ein Suspensionsfilm auf dem dreidimensional strukturierte Metallsubstrat bildet;
d) Trocknen des Suspensionsfilms auf dem dreidimensional strukturierten Metallsubstrat bei einer Temperatur T₁ in einem Bereich zwischen 18°C - 250°C, sodass das Lösungsmittel innerhalb des Suspensionsfilms verdampft und eine Schicht einer Katalysatorvorstufe mit integrierten Templatstrukturen erhalten wird;
e) thermische Behandlung des Katalysatorvorstufen umfassenden dreidimensional strukturierte Metallsubstrats bei einer zweiten Temperatur T₂ in einem Bereich zwischen 200°C und 1000°C und einer Kalzinierzeit t₂ in einem Bereich zwischen 1 Minute und 1440 Minuten, sodass eine mesoporöse Katalysatorschicht entsteht.

2. Verfahren nach Anspruch 1
**dadurch gekennzeichnet, dass**
das Auftragen der Suspension aus Schritt (c) anhand einer Tauchbeschichtung erfolgt.

3. Verfahren nach einem oder mehreren der vorhergehenden Ansprüche
**dadurch gekennzeichnet, dass**
das dreidimensional strukturierte Metallsubstrat als ein Netz, Schaum, Gitter, Sieb, Gewebe und/oder Geflecht ausgestaltet ist.

4. Verfahren nach einem oder mehreren der vorhergehenden Ansprüche
**dadurch gekennzeichnet, dass**
die Temperatur T₂ in einem Bereich liegt zwischen 300°C und 800°C, und die Kalzinierzeit t₂ in einem Bereich liegt zwischen 10 bis 120 Minuten.

5. Verfahren nach einem oder mehreren der vorhergehenden Ansprüche
**dadurch gekennzeichnet, dass**
die Suspension ein oder mehrere amphiphile Block-Copolymere umfasst.

6. Verfahren nach Anspruch 5
**dadurch gekennzeichnet, dass**
das amphiphile Block-Copolymer ausgewählt ist aus der Gruppe bestehend aus
AB-Block Copolymeren (Polyethylenoxid-block-polystyrene (PEO-PS), Polyethylenoxid-block-polymethylmethacrylat (PEO-PMMA), Poly-2-venlypyridin-block-polyallylmethacrylat (P2VP-PAMA), Polybutadien-bock-polyethyleneoxid (PB-PEO), Polyisopren-bock-polydimethylaminoethylmetacrlyt (PI-PDMAEMA), Polybutadien-bock-polydimethylaminoethylmetacrlyt (PB-PDMAEMA), Polyethylen-block-polyethylenoxid (PE-PEO), Polyisobutylen-block-po-lyethylenoxid (PIB-PEO) und Poly(ethylen-co-buty-len)-block-poly(ethylenoxid) (PEB-PEO), Polystyrol-block-poly(4-vinylpyridin) (PS-P4VP), Polyisopren-block-polyethyleneoxid (Pl-PEO), Polydimethoxyanilin-block-polystyrol (PDMA-PS), Polyethylenoxid-block-poly-n-utylacrylat (PEO-PBA), Polybutadien-bock- poly(2-vinylpyridin (PB-P2VP)), Polyethylenoxid-block-polylactid (PEO-PLA), Polyethylenoxid-block-polyglycolid (PEO-PLGA), Polyethylenoxid-block-polycaprolacton (PEO-PCL), Polyethylen-block-polyethylenglycol (PE-PEO), Polystyrol-block-polymethylmethacrlyt (PS-PMMA), Polystyrol-block-polyacrylsäure (PS-PAA), polypyrrol-block-polycaprolacton (PPy-PCL), Polysilicon-block-polyetylenoxid (PDMS-PEO),
ABA-Block Copolymeren (Polyethylenoxid-block-polybutadien-block-polyethylenoxid (PEO-PB-PEO), Polyethylenoxid-block-polypropylenoxid-block-polyethylenoxid (PEO-PPO-PEO), Polypropylenoxid-block-polyethylenoxid-block-polypropylenoxid (PPO-PEO-PPO), Polyethylenoxid-block-polyisobutylen-block-polyethylenoxid (PEO-PIB-PEO), Polyethylenoxid-block-polybutadien-block-polyethylenoxid (PEO-PB-PEO)), Polylactid-block-polyethylenoxid-block-polylactidd (PLA-PEO-PLA), Polyglycolid-block-polyethylenoxid-block-polyglycolid (PGLA-PEO-PGLA), Polylactid-co-caprolacton-block-polyethylenoxid-block-polylactid-cocaprolacton (PLCL-PEO-PLCL), Polycaprolacton-blockpolytetrahydrofuran-blockpolycaprolacton (PCL-PTHF-PCL), Polypropylenoxid-block-Polyethylenoxid-block-polypropylenoxid (PPG-PEO-PPG), Polystyrol-block-polybutadien-block-polystyrol (PS-PB-PS), Polystyrol-block-polyethylen-ranbutylen-block-polystyrol (PS-PEB-PS), Polystyrol-block-polyisopren-block-polystyrol (PS-PI-PS),
ABC-Block Coplymeren (Polyisopren-block-polystyrol-block-polyethyleneoxid (PI-PS-PEO), Polystyrol-block-Polyvinylpyrrolidon-block- polyethyleneoxid (PS-PVP-PEO), Polystyrol-block-poly-2-venylpyridin-block-polyethylenoxid (PS-P2VP-PEO), Polystyrol-block-poly-2-venylpyridin-block-polyethylenoxid (PS-P2VP-PEO), Polystyrol-block-polyacrylsäure-polyethylenoxid (PS-PAA-PEO)), Polyethylenoxid-block-polylactid-block-decan (PEO-PLA-decan),
sowie anderen amphiphilen Polymeren (Polyethylenoxid-alkylether (PEO-Cₓₓ), z.B. Brij35, Brij56, Brij58)
oder Gemischen dieser,
vorzugsweise PEO-PB, PEO-PPO, PEO-PB-PEO, PEO-PPO-PEO.

7. Verfahren nach einem oder mehreren der vorhergehenden Ansprüche
**dadurch gekennzeichnet, dass**
als Metall-Präkursor ein Metallsalz oder mehrere Metallsalze jeweils unterschiedlicher Metalle, oder deren Hydrate, eingesetzt werden.

8. Verfahren nach Anspruch 7
**dadurch gekennzeichnet, dass**
die Metallsalze ausgewählt sind aus der Gruppe bestehend aus Metallnitrat, Metallhalogenid, Metallsulfat, Metallacetat, Metallcitrat, Metallalkoxid oder deren Gemischen.

9. Verfahren nach einem oder mehreren der vorhergehenden Ansprüche
**dadurch gekennzeichnet, dass**
die im Metall-Präkursor enthaltenen Metalle ausgewählt sind aus der Gruppe bestehend aus Alkalimetallen, vorzugsweise Lithium, Natrium, Kalium, Rubidium, Cäsium, Erdalkalimetallen, vorzugsweise Magnesium, Calcium, Strontium, Barium, Metallen der dritten Hauptgruppe des Periodensystems, vorzugsweise Bor, Aluminium, Indium, Gallium, Thallium, Metallen der vierten Hauptgruppe des Periodensystems, vorzugsweise Zinn, Silicium, Germanium, Blei, Metallen der fünften Hauptgruppe des Periodensystems, vorzugsweise Bismut, und Übergangsmetallen, vorzugsweise Iridium, Ruthenium, Cobalt, Zink, Kupfer, Mangan, Cadmium, Vanadium, Yttrium, Zirkonium, Scandium, Titan.

10. Verfahren nach einem oder mehreren der vorhergehenden Ansprüche
**dadurch gekennzeichnet, dass**
als Lösungsmittel Wasser oder ein C1-C4-Alkohol, C2-C4-Ester, C2-C4-Ether, Formamid, Acetonitril, Aceton, Tetrahydrofuran, Benzyl, Toluol, Dimethylsulfoxid, Dichlormethan, Chloroform oder deren Mischungen eingesetzt werden, vorzugsweise Methanol, Ethanol, Formamid und/oder Tetrahydrofuran.

11. Elektrode für eine für eine elektrochemische Zelle hergestellt durch ein Verfahren nach einem oder mehreren der vorhergehenden Ansprüche, **dadurch gekennzeichnet, dass**
die Elektrode ein dreidimensional strukturiertes Metallsubstrat ist und eine nanostrukturierte mesoporöse Katalysatorschicht umfasst.

12. Elektrode gemäß Anspruch 11
**dadurch gekennzeichnet, dass**
das dreidimensional strukturierte Metallsubstrat als ein Netz, Schaum, Gitter, Gewebe und/oder Geflecht ausgestaltet ist.

13. Elektrochemische Zelle umfassend eine Elektrode nach den Ansprüchen 11 und/oder 12.

## Claims

1. A method for producing a catalyst-coated three-dimensionally structured electrode comprising the following steps:
a) Providing a three-dimensionally structured metal substrate;
b) producing a suspension comprising a template, a metal precursor and a solvent;
c) applying the suspension to the three-dimensionally structured metal substrate, so that a suspension film forms on the three-dimensionally structured metal substrate;
d) drying of the suspension film on the three-dimensionally structured metal substrate at a temperature T₁ in a range between 18° C to 250° C, so that the solvent within the suspension film evaporates and a layer of a catalyst pre-stage with integrated template structures is obtained;
e) thermal treatment of the three-dimensionally structured metal substrate, comprising catalyst pre-stages, at a second temperature T₂ in a range between 200° C and 1000° C and a calcinating time t₂ in a range between 1 minute and 1440 minutes, so that a mesoporous catalyst coating forms.

2. The method according to claim 1
**characterized in that**
an immersion coating technique is used to apply the suspension from step c).

3. The method according to one or several of the preceding claims
**characterized in that**
the three-dimensionally structured metal substrate is embodied as a net, foam, grid, strainer, fabric and/or mesh.

4. The method according to one or several of the preceding claims
**characterized in that**
the temperature T₂ is in a range between 300° C and 800° C and that the calcinating time t₂ is in a range between 10 and 120 minutes.

5. The method according to one or several of the preceding claims **characterized in that**
the suspension comprises one or several amphiphile block copolymers.

6. The method according to claim 5
**characterized in that**
the amphiphile block copolymer is selected from the group consisting of:
AB block copolymers (poly ethylene oxide block polystyrene (PEO-PS); poly ethylene oxide block polymethyl methacrylate (PEO-PMMA); poly-2-vinyl pyridine block poly allyl methacrylate ((P2VP-PAMA); poly butadiene block polyethylene oxide ((PB-PEO); poly isoprene block poly dimethyl amine ethyl methacrylate ((Pl-PDMAEMA); poly butadiene block poly dimethyl aminoethyl methacrylate (PB-PDMAEMA); poly ethylene block poly ethylene oxide ((PE-PEO); polyisobutylene block polyethylene oxide (PIB-PEO) and poly (ethylene-co-butylene) block poly (ethylene oxide) (PEB-PEO); poly styrene block poly (4 vinyl pyridine (PS-P4VP); poly isoprene block poly ethylene oxide (PI-PEO); poly dimethoxy aniline block poly styrene (PDMA-PS); polyethylene oxide block poly-n-utyl acrylate (PEO-PBA); poly butadiene-block-poly (2 vinyl pyridine (PB-P2VP)); poly ethylene oxide-block-polyactide (PEO-PLA); polyethylene oxide block polyglycolide (PEO-PLGA); polyethylene oxide block polycaprolactone (PEO-PCL); polyethylene block polyethylene glycol (PE-PEO); polystyrene block poly methyl methacrylate (PS-PMMA); polystyrene block poly acrylic acid (PS-PAA); polypyrrole block polycaprolactone (PPy-PCL); polysilicon block poly ethylene oxide (PDMS-PEO) ABA block copolymers (polyethylene oxide block poly butadiene block polyethylene oxide (PEO-PB-PEO); polyethylene oxide block poly propylene oxide block polyethylene oxide (PEO-PPO-PEO); polypropylene oxide block polyethylene oxide block polypropylene oxide (PPO-PEO-PPO); polyethylene oxide block poly isobutylene block polyethylene oxide (PEO-PIB-PEO); polyethylene oxide block polybutadiene block polyethylene oxide (PEO-PB-PEO)); polyactide block polyethylene oxide block polyactide (PLA-PEO-PLA); polyglycolide block polyethylene oxide block polyglycolide (PGLA-PEO-PGLA); polyactde-co-caprolactone block polyethylene oxide block polyactide-co-caprolactone (PLCL-PEO-PLCL); polycaprolactone block polytetrahydrofuran block polycaprolactone (PCL-PTHF-PCL); polypropylene oxide block polyethylene oxide block polypropylene oxide (PPG-PEO-PPG); polystyrene block polybutadiene block polystyrene (PS-PB-PS); polystyrene block polyethylene-ran-butylene block polystyrene (PS-PEB-PS); polystyrene block polyisoprene block polystyrene (PS-PI-PS); ABC block copolymers (polyisoprene block polyethylene oxide (PI-PS-PEO); polystyrene block polyvinyl pyrrolidone block polyethylene oxide (PS-PVP-PEO); polystyrene block poly-2-venylpiridine block polyethylene oxide (PS-P2VP-PEO); polystyrene block poly-2-venylpiridine block polyethylene oxide (PS-P2VP-PEO); polystyrene block poly acrylic acid polyethylene oxide (PS-PAA-PEO)); polyethylene oxide block polyactide block decane (PEO-PLA-decane); as well as other amphiphilic polymers (polyethylene oxide alkyl ether (PEO-Cₓₓ), for example Brij35, Brij56, Brij58) or mixtures thereof, preferably PEO-PB, PEO-PPO, PEO-PB-PEO, PEO-PPO-PEO.

7. The method according to one or several of the preceding claims **characterized in that**
a metal salt or several metal salts of respectively different metals, or their hydrates, are used for the metal precursor.

8. The method according to claim 7
**characterized in that**
the metal salts are selected from the group consisting of metal nitrate, metal halogenide, metal sulfate, metal acetate, metal citrate, metal alkoxide or mixtures thereof.

9. The method according to one or several of the preceding claims,
**characterized in that**
the metals contained in the metal precursor are selected from the group consisting of alkali metals, preferably lithium, sodium, potassium, rubidium, cesium; alkaline earth metals, preferably magnesium, calcium, strontium, barium; metals of the third main group in the periodic system, preferably boron, aluminum, indium, gallium, thallium; metals of the fourth main group in the periodic system, preferably tin, silicon, germanium, lead; metals from the fifth main group of the periodic system, preferably bismuth; and transition metals, preferably iridium, ruthenium, cobalt, zinc, copper, manganese, cadmium, vanadium, yttrium, zirconium, scandium and titanium.

10. The method according to one or several of the preceding claims
**characterized in that**
the solvent used is water or a C1-C4 alcohol, C2-C4 ester, C2-C4 ether, formamide, acetone nitril, acetone, tetrahydrofuran, benzyl, toluene, dimethyl sulfoxide, dichloromethane, chloroform, or mixtures thereof, preferably methanol, ethanol, formamide and/or tetrahydrofuran.

11. An electrode for an electrochemical cell produced with a method according to one or several of the preceding claims,
**characterized in that**
the electrode is a three-dimensionally structured metal substrate and comprises a nano-structured mesoporous catalyst coating.

12. The electrode according to claim 11
**characterized in that**
the three-dimensionally structured metal substrate is embodied in the form of a net, foam, grid, fabric and/or mesh.

13. An electrochemical cell with an electrode according to the claims 11 and/or 12.

## Revendications

1. Procédé de fabrication d'une électrode structurée à trois dimensions revêtue de catalyseur
comprenant les étapes suivantes :
a) la fourniture d'un substrat métallique structuré à trois dimensions ;
b) la préparation d'une suspension comprenant un modèle, un précurseur métallique et un solvant ;
c) l'application de la suspension sur le substrat métallique structuré à trois dimensions de manière à former un film de suspension sur le substrat métallique structuré à trois dimensions ;
d) le séchage du film de suspension sur le substrat métallique structuré à trois dimensions à une température T₁ dans une plage entre 18 °C et 250 °C, de sorte que le solvant contenu dans le film de suspension s'évapore et qu'une couche d'un précurseur de catalyseur avec des structures de modèle intégrées est obtenue ;
e) le traitement thermique d'un substrat métallique structuré à trois dimensions comprenant des précurseurs de catalyseur à une seconde température T₂ comprise entre 200 °C et 1000 °C et à un temps de calcination t₂ dans une plage entre 1 minute et 1440 minutes pour former une couche de catalyseur mésoporeuse.

2. Procédé selon la revendication 1,
**caractérisé en ce que**
l'application de la suspension de l'étape (c) intervient au moyen d'un revêtement par immersion.

3. Procédé selon l'une ou plusieurs des revendications précédentes,
**caractérisé en ce que**
le substrat métallique structuré à trois dimensions est constitué d'un filet, d'une mousse, d'une grille, d'un tamis, d'un tissu et/ou d'un treillis.

4. Procédé selon l'une ou plusieurs des revendications précédentes,
**caractérisé en ce que**
la température T₂ est comprise entre 300 °C et 800 °C, et le temps de calcination t₂ est compris entre 10 et 120 minutes.

5. Procédé selon l'une ou plusieurs des revendications précédentes,
**caractérisé en ce que**
la suspension comprend un ou plusieurs copolymères blocs amphiphiles.

6. Procédé selon la revendication 5,
**caractérisé en ce que**
le copolymère bloc amphiphile est choisi dans le groupe constitué :
de copolymères blocs AB (oxyde de polyéthylène-bloc-polystyrène (PEO-PS), oxyde de polyéthylène-bloc-polyméthacrylate de méthyle (PEO-PMMA), poly-2-venlypyridine-bloc-polyallyl méthacrylate (P2VP-PAMA), polybutadiène-bloc-oxyde de polyéthylène (PB-PEO), polyisoprène-blocméthacrylate de polydiméthylaminoéthyle (PI-PDMAEMA), polybutadiène-blocméthacrylate de polydiméthylaminoéthyle (PB-PDMAEMA), polyéthylène-bloc-oxyde de polyéthylène (PE-PEO), polyisobutylène-bloc-oxyde de polyéthylène (PIB-PEO) et poly(éthylène-co-butylène)-bloc-oxyde de poly(éthylène) (PEB-PEO), polystyrène-bloc-poly(4-vinylpyridine) (PS-P4VP), polyisoprène-bloc-oxyde de polyéthylène (PI-PEO), polydiméthoxyaniline-bloc-polystyrène (PDMA-PS), oxyde de polyéthylènebloc-acrylate de poly-n-utyle (PEO-PBA), polybutadiène-bloc-poly(2-vinylpyridine (PB-P2VP)), oxyde de polyéthylène-bloc-polylactide (PEO-PLA), oxyde de polyéthylène-bloc-polyglycolide (PEO-PLGA), oxyde de polyéthylène-bloc-polycaprolactone (PEO-PCL), polyéthylène-bloc-polyéthylène glycol (PE-PEO), polystyrène-blocpolyméthacrylate de méthyle (PS-PMMA), polystyrène-bloc-acide polyacrylique (PS-PAA), polypyrrole-bloc-polycaprolactone (PPy-PCL), polysilicium-bloc-oxyde de polyéthylène (PDMS-PEO),
de copolymères blocs ABA (oxyde de polyéthylène-bloc-polybutadiène-bloc-oxyde de polyéthylène (PEO-PB-PEO), oxyde de polyéthylène-bloc-oxyde de polypropylène-bloc-oxyde de polyéthylène (PEO-PPO-PEO), oxyde de polypropylène-bloc-oxyde de polyéthylène-bloc-oxyde de polypropylène (PPO-PEO-PPO), oxyde de polyéthylène-bloc-polyisobutylène-bloc-oxyde de polyéthylène (PEO-PIB-PEO), oxyde de polyéthylène-bloc-polybutadiène-bloc-oxyde de polyéthylène (PEO-PB-PEO)), polylactide-bloc-oxyde de polyéthylène-bloc-polylactide (PLA-PEO-PLA),
polyglycolide-bloc-oxyde de polyéthylène-bloc-polyglycolide (PGLA-PEO-PGLA), polylactide-co-caprolactone-bloc-oxyde de polyéthylène-bloc-polylactide-co-caprolactone (PLCL-PEO-PLCL), polycaprolactone-bloc-polytétrahydrofurane-bloc-polycaprolactone (PCL-PTHF-PCL), oxyde de polypropylène-bloc-oxyde de polyéthylène-bloc-oxyde de polypropylène (PPG-PEO-PPG), polystyrène-bloc-polybutadiène-bloc-polystyrène (PS-PB-PS), polystyrène-ran-butylène-bloc-polystyrène (PS-PEB-PS), polystyrène-bloc-polyisoprène-bloc-polystyrène (PS-PI-PS),
de copolymères blocs ABC (polyisoprène-bloc-polystyrène-bloc-oxyde de polyéthylène (PI-PS-PEO), polystyrène-bloc-polyvinylpyrrolidone-bloc-oxyde de polyéthylène (PS-PVP-PEO), polystyrène-bloc-poly-2-vénylpyridine-bloc-oxyde de polyéthylène (PS-P2VP-PEO), polystyrène-bloc-poly-2-vénylpyridine-bloc-oxyde de polyéthylène (PS-P2VP-PEO), polystyrène-bloc-acide polyacrylique-oxyde de polyéthylène (PS-PAA-PEO)), oxyde de polyéthylène-bloc-polylactide-bloc-décane (PEO-PLA-décane),
ainsi que d'autres polymères amphiphiles (oxyde de polyéthylène-éther alkylique (PEO-Cₓₓ), par exemple Brij35, Brij56, Brij58) ou des mélanges de ceux-ci,
de préférence PEO-PB, PEO-PPO, PEO-PB-PEO, PEO-PPO-PEO.

7. Procédé selon l'une ou plusieurs des revendications précédentes,
**caractérisé en ce que**
un sel métallique ou plusieurs sels métalliques de différents métaux, ou leurs hydrates, sont utilisés comme précurseur métallique.

8. Procédé selon la revendication 7,
**caractérisé en ce que**
les sels métalliques sont choisis dans le groupe constitué du nitrate métallique, de l'halogénure métallique, du sulfate métallique, de l'acétate métallique, du citrate métallique, de l'alcoxyde métallique ou de mélanges de ceux-ci.

9. Procédé selon l'une ou plusieurs des revendications précédentes,
**caractérisé en ce que**
les métaux contenus dans le précurseur métallique sont choisis dans le groupe constitué de métaux alcalins, de préférence le lithium, le sodium, le potassium, le rubidium, le césium, de métaux alcalino-terreux, de préférence le magnésium, le calcium, le strontium, le baryum, de métaux du troisième groupe principal du tableau périodique, de préférence le bore, l'aluminium, l'indium, le gallium, le thallium, de métaux du quatrième groupe principal du tableau périodique, de préférence l'étain, le silicium, le germanium, le plomb, de métaux du cinquième groupe principal du tableau périodique, de préférence le bismuth, et de métaux de transition, de préférence l'iridium, le ruthénium, le cobalt, le zinc, le cuivre, le manganèse, le cadmium, le vanadium, l'yttrium, le zirconium, le scandium, le titane.

10. Procédé selon l'une ou plusieurs des revendications précédentes,
**caractérisé en ce que**
le solvant utilisé est l'eau ou un alcool en C1-C4, un ester en C2-C4, un éther en C2-C4, le formamide, l'acétonitrile, l'acétone, le tétrahydrofurane, le benzyle, le toluène, le diméthylsulfoxyde, le dichlorométhane, le chloroforme ou des mélanges de ceux-ci, de préférence le méthanol, l'éthanol, le formamide et/ou le tétrahydrofurane.

11. Électrode pour une cellule électrochimique fabriquée par un procédé selon l'une ou plusieurs des revendications précédentes, **caractérisée en ce que**
l'électrode est un substrat métallique structuré à trois dimensions et comprend une couche de catalyseur mésoporeuse nanostructurée.

12. Électrode selon la revendication 11
**caractérisée en ce que**
le substrat métallique structuré à trois dimensions est constitué d'un filet, d'une mousse, d'une grille, d'un tissu et/ou d'un treillis.

13. Cellule électrochimique comprenant une électrode selon les revendications 11 et/ou 12.
